(19) Europäisches Patentamt
European Patent Office
Office européen des brevets

(11) EP 4 674 880 A1

(12) EUROPEAN PATENT APPLICATION

(43) Date of publication:
**07.01.2026 Bulletin 2026/02**

(21) Application number: **24222711.4**

(22) Date of filing: **23.12.2024**

(51) International Patent Classification (IPC):
***C08G 16/02*** *(2006.01)* ***C08G 16/04*** *(2006.01)*
***H01M 50/414*** *(2021.01)* ***H01M 50/497*** *(2021.01)*

(52) Cooperative Patent Classification (CPC):
**C08G 16/0225; C08G 16/04; H01M 50/411; H01M 50/497;** H01M 8/188

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.07.2024 KR 20240086408**

(71) Applicant: **SK Innovation Co., Ltd.**
**Seoul 03188 (KR)**

(72) Inventors:
- **KIM, Cheol Woo**
  **34124 Daejeon (KR)**
- **LEE, Dong Gun**
  **34124 Daejeon (KR)**
- **LEE, So Young**
  **34124 Daejeon (KR)**
- **CHO, Soo Min**
  **34124 Daejeon (KR)**
- **KIM, Jong Chan**
  **34124 Daejeon (KR)**
- **LEE, Jung A**
  **34124 Daejeon (KR)**

(74) Representative: **Prüfer & Partner mbB**
**Patentanwälte · Rechtsanwälte**
**Sohnckestraße 12**
**81479 München (DE)**

Remarks:
Amended claims in accordance with Rule 137(2) EPC.

# (54) ION CONDUCTIVE POLYMER AND SEPARATOR INCLUDING THE SAME

(57) The present disclosure relates to an ion conductive polymer including a repeating unit which includes quaternary ammonium and at least one ether group.

EP 4 674 880 A1

## Description

[BACKGROUND OF THE INVENTION]

Field of the Invention

The present disclosure relates to an ion conductive polymer and a separator including the ion conductive polymer.

Description of the Related Art

Generally, a separator is a barrier which exists between two different substances, and allows a specific substance to selectively pass therethrough. The separators may be classified into various types according to properties, materials, shapes, etc. thereof. In this case, an ion exchange membrane corresponds to a non-porous membrane, a symmetrical membrane, a single membrane, a homogeneous membrane, a hydrophilic membrane, a charged membrane, a liquid separator and other ion exchange membranes.

The ion exchange membrane is a membrane having an ion exchange function for a specific ion, which is a specified and high-efficient type of separator. When introducing an ion exchange membrane into an electrolyte solution and applying a current thereto, functional groups having positive or negative charges on pore walls of the membrane attract only specific ions having opposite charges into the pores of the membrane, thereby retaining electrical neutrality. The specific ions that have been bound to the functional groups on the pores of the membrane pass through the membrane by continuously repeating binding to the functional groups on the pores and dissociating therefrom.

The ion exchange membranes may be classified into a cation exchange membrane (CEM), an anion exchange membrane (AEM), and a bipolar exchange membrane (BEM) according to characteristics thereof. The cation exchange membrane is a membrane which allows only cations to pass therethrough while anions serve as the fixed charges. The anion exchange membrane is a membrane which allows only anions to pass therethrough while cations serve as the fixed charges. The bipolar exchange membrane has both sides to which cation and anion exchange membranes are coupled, and allows both the cations and anions to selectively pass therethrough.

The ion exchange membrane may be used in various fields such as water treatment, chemistry, energy industries and the other technical fields. Since the ion exchange membrane should allow different specific charges to selectively pass therethrough, it is requested to have low electrical resistance and high ionic conductivity. In addition, the ion exchange membrane should have excellent mechanical strength and be chemically stable in order to use continuously for a long period of time.

[Prior Art Document]

[Patent Document]

Korean Patent Laid-Open Publication No. 2018-0100079

[SUMMARY OF THE INVENTION]

An object of the present disclosure is to provide an ion conductive polymer having improved ionic conductivity.

Another object of the present disclosure is to provide a separator including the ion conductive polymer having improved ionic conductivity.

In an aspect of the present disclosure, an ion conductive polymer is provided, wherein the ion conductive polymer includes a repeating unit which includes a benzene/aryl group which bears at least one ether group as substituent, and wherein the repeating unit includes a quaternary ammonium group which is bonded to the benzene/aryl ring via an organic group, such as an organic group having 1 to 20, or 4 to 16, or 6 to 12 carbon atoms. With a separator or ion exchange membrane with a conductive polymer having such structural configuration of repeating unit, ionic conductivity may be improved.

To achieve the above objects, an ion conductive polymer according to exemplary embodiments of the present disclosure includes a repeating unit represented by Formula 1 below:

[Formula 1]

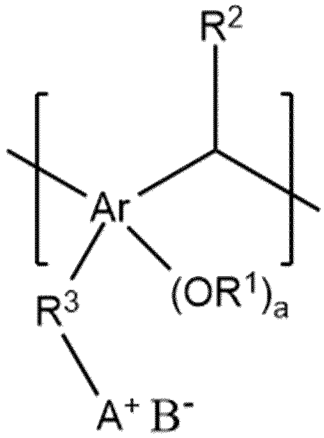

In Formula 1, $A^+$ is quaternary ammonium, $B^-$ is an anion, a is an integer of 1 to 3, $R^1$ is an organic group having 1 to 10 carbon atoms, $R^2$ is H or an organic group having 1 to 10 carbon atoms, $R^3$ is an organic group having 1 to 20 carbon atoms, and Ar is a benzene ring; optionally wherein $R^3$ may include at least one of an alkylene group and/or an arylene group, , wherein the term "alkylene group" refers to bivalent saturated hydrocarbon group.

In exemplary embodiments, the $B^-$ may be a monovalent or divalent anion.

In exemplary embodiments, the $B^-$ may be a halogen anion.

In exemplary embodiments, the $B^-$ may be a bromine anion ($Br^-$).

In exemplary embodiments, the $R^1$ may be a methyl group ($-CH_3$).

In exemplary embodiments, the $R^2$ may be an organic group having 1 to 8 carbon atoms.

In exemplary embodiments, the $R^3$ may be an organic group having 4 to 16 carbon atoms.

In exemplary embodiments, the repeating unit represented by Formula 1 above may include at least one of repeating units represented by Formulas 1-1 to 1-5 below:

[Formula 1-1]

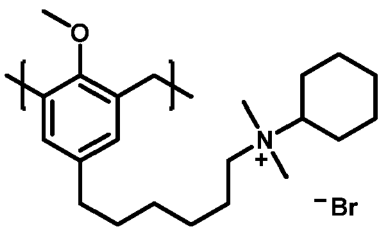

[Formula 1-2]

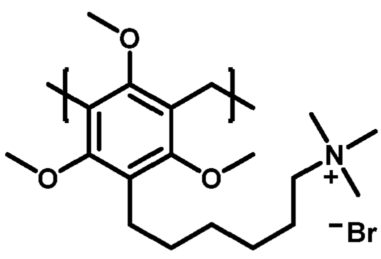

[Formula 1-3]

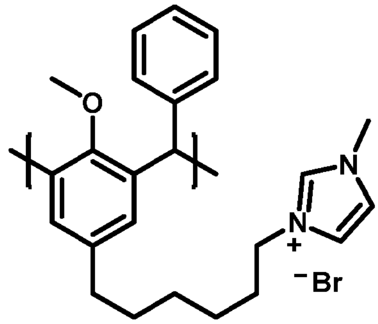

[Formula 1-4]

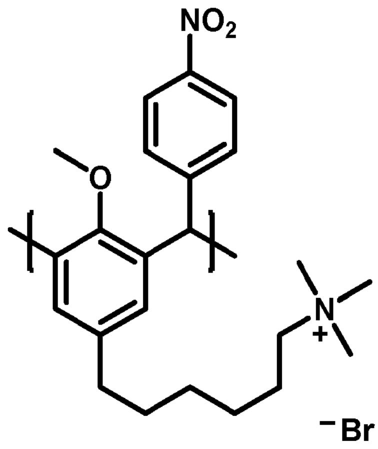

and

[Formula 1-5]

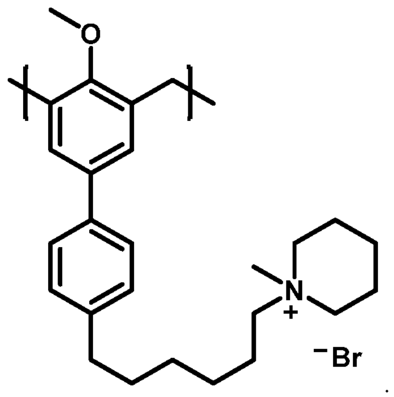

In exemplary embodiments, an $OH^-$ ionic conductivity of the ion conductive polymer may be 40 mS/cm to 80 mS/cm.

In a method for preparing an ion conductive polymer according to exemplary embodiments of the present disclosure, a monomer having a benzene ring in which at least one alkoxy group is substituted is prepared. The monomer reacts with an aldehyde under mild acidic conditions to obtain a precursor polymer. A quaternary ammonium group(s) is introduced into the precursor polymer to synthesize an ion conductive polymer including a repeating unit represented by Formula 1 below:

[Formula 1]

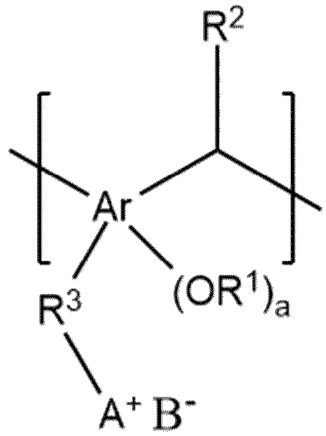

In Formula 1, $A^+$ is quaternary ammonium, $B^-$ is an anion, a is an integer of 1 to 3, $R^1$ is an organic group having 1 to 10 carbon atoms, $R^2$ is H or an organic group having 1 to 10 carbon atoms, $R^3$ is an organic group having 1 to 20 carbon atoms, which may include at least one of an alkylene group and/or an arylene group, and Ar is a benzene ring. The term "alkylene group" may refer to bivalent saturated hydrocarbon group, such as including one or more methylene groups.

A separator according to exemplary embodiments includes the above-described ion conductive polymer.

A device according to exemplary embodiments includes: a cathode; an anode to face the cathode; and the above-described separator, which is disposed between the cathode and the anode.

In exemplary embodiments, the device may include a water electrolysis device, a $CO^2$ electrolysis device, a fuel cell, an electrolytic cell, or a vanadium flow battery.

The ion conductive polymer according to exemplary embodiments of the present disclosure may exhibit excellent ionic conductivity.

As the separator according to exemplary embodiments of the present disclosure includes the ion conductive polymer, it is possible to exhibit excellent ionic conductivity.

The ion conductive polymer and the separator of the present disclosure may be widely applied to green technology fields such as an electric vehicle, and a battery charging station, as well as solar power generation and wind power generation using batteries.

In addition, the ion conductive polymer and the separator of the present disclosure may be used in an eco-friendly electric vehicle, a hybrid vehicle, and the other device, intended to prevent climate change by suppressing air pollution and greenhouse gas emissions.

[DETAILED DESCRIPTION OF THE INVENTION]

According to embodiments of the present disclosure, there is provided an ion conductive polymer including a repeating unit which includes quaternary ammonium(s) and at least one ether group.

As the ion conductive polymer includes quaternary ammonium, mechanical and chemical stability and ionic conductivity thereof may be improved.

As the ion conductive polymer includes the ether group, synthesis of the polymer may be performed under mild acidic conditions.

As the ion conductive polymer includes a main chain composed of carbon-carbon (C-C) bonds, physicochemical durability thereof may be improved.

Hereinafter, the present disclosure will be described in detail through embodiments. However, the embodiments are merely illustrative and the present disclosure is not limited to the specific embodiments described by way of example.

In exemplary embodiments, an ion conductive polymer is provided, wherein the ion conductive polymer includes a repeating unit which includes a benzene/aryl group which bears at least one ether group as substituent, and wherein the repeating unit includes a quaternary ammonium group which is bonded to the benzene/aryl ring via an organic group, such as an organic group having 1 to 20, or 4 to 16, or 6 to 12 carbon atoms. With a separator or ion exchange membrane with a conductive polymer having such structural configuration of repeating unit, ionic conductivity may be improved.

The ion conductive polymer according to exemplary embodiments of the present disclosure includes a repeating unit represented by Formula 1 below.

[Formula 1]

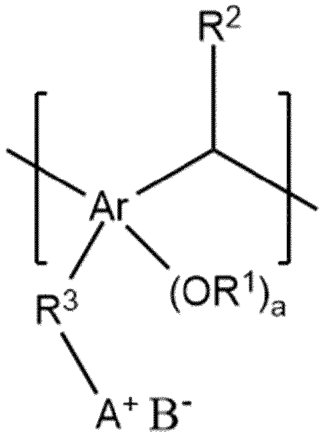

In exemplary embodiments, $A^+$ may be quaternary ammonium. In exemplary embodiments, $A^+$ may be an ammonium with at least one organic group. In an exemplary embodiment $A^+$ may have at least one substituent including at least one methyl group. For example, $A^+$ may be quaternary ammonium ($NR'_4$, wherein R' is alkyl group or aryl group).

In the present disclosure, the ammonium may also include ammonium in which two different substituents among substituents bonded to a nitrogen atom are linked to form a ring structure. For example, $A^+$ may be selected from the group of trimethylammonium, triethylammonium, tripropylammonium, tributylammonium, imidazolium, piperidinium, quinuclidinium and similar organic ammonium groups. In exemplary embodiments, $B^-$ may be an anion. In exemplary embodiments, $B^-$ may be a monovalent or divalent anion. For example, when $B^-$ is a divalent anion, two $A^+$ and $A^+$ located on different chains may bind together to one $B^-$ to form a cross-linked structure.

In exemplary embodiments, $B^-$ may be a halogen anion. For example, $B^-$ may be a chloride anion (CF), a bromine anion ($Br^-$), an iodine anion ($I^-$), a hydroxide ion ($OH^-$), a sulfate anion ($SO_4^{2-}$), a carbonate anion ($CO_3^{2-}$), a bicarbonate anion ($HCO_3^-$), or a carboxylic acid anion ($RCO_2^-$).

In exemplary embodiments, a may be an integer of 1 to 3. This means that the aryl "Ar" is substituted by 1, 2 or 3 $-OR^1$ group(s). For example, a may be 1 or 3.

In exemplary embodiments, $R^1$ may be an organic group having 1 to 10 carbon atoms.

In exemplary embodiments, the organic group may include only carbon and hydrogen, or also include one or more atoms other than carbon and hydrogen. For example, the atoms other than carbon and hydrogen may be at least one of nitrogen (N), oxygen (O), phosphorus (P), and sulfur (S).

In exemplary embodiments, $R^1$ may be an organic group having 1 to 6 carbon atoms, 1 to 5 atoms, 1 to 3 atoms, or 1 to 2 atoms. For example, $R^1$ may be a methyl group ($-CH_3$).

In exemplary embodiments, the ion conductive polymer including the repeating unit represented by Formula 1 above may include an ether bond, in the form of at least one substituent(s) located/bonded at a benzene ring. When the ether bond is accordingly substituted/bonded at the benzene ring, electrons of the benzene ring are placed in an electron-rich state. Accordingly, synthesis of the ion conductive polymer may be performed under relatively mild acidic conditions rather than under super-strong acidic conditions such as triflic acid.

According to exemplary embodiments, the mild acid may have an acid dissociation constant (pKa) of -7 or more.

For example, the mild acid may be methanesulfonic acid, trifluoroacetic acid, nitric acid, sulfuric acid, hydrochloric acid and the like.

In exemplary embodiments, $R^2$ may be H or an organic group having 1 to 10 carbon atoms.

In exemplary embodiments, the organic group may be a hydrocarbon group, or a hydrocarbon group having one or more heteroatoms. The heteroatoms may be, for example, nitrogen (N), oxygen (O), phosphorus (P) or sulfur (S).

For example, the $R^2$ may be an organic group having 1 to 8 carbon atoms. Alternately, the $R^2$ may be an organic group having 1 to 6 carbon atoms.

In exemplary embodiments, the $R^2$ may be further substituted with at least one substituent of an electron withdrawing group (EWG). The electron withdrawing group may be, for example, a nitro group, a trifluoromethyl group, a cyano group, a fluoro group, and an acyl group. Accordingly, the synthesis of the ion conductive polymer may be more easily performed.

In exemplary embodiments, the $R^3$ may be an organic group having 1 to 20 carbon atoms, which may include at least one of an alkylene group and/or an arylene group, wherein the alkylene group refers to bivalent saturated hydrocarbon group, such as including one or more methylene [$-CH_2-$] groups, wherein the arylene group includes such as one or more phenylene [$-C_6H_4-$] groups. For example, the $R^3$ may be an organic group having 4 to 16 carbon atoms.

Alternatively, the $R^3$ may be an organic group having 6 to 14 carbon atoms. Or otherwise, the $R^3$ may be an organic group having 6 to 12 carbon atoms.

When the quaternary ammonium ion is directly linked to the benzene ring without other organic groups such as $R^3$, the ammonium functional group may be decomposed by a bimolecular nucleophilic substitution ($S_N2$) reaction or a Hofmann elimination. When the $S_N2$ reaction occurs, the ammonium functional group may react with $OH^-$ to be decomposed into an alcohol functional group and tertiary amine. When the Hofmann elimination occurs, a beta hydrogen atom of the ammonium functional group is attacked by $OH^-$ to form a double bond, and decomposition of the ammonium functional group may occur. When the decomposition of the ammonium functional group occurs, the mechanical strength and ionic conductivity of the ion conductive polymer may be significantly impaired.

In the present disclosure, since the quaternary ammonium ion is linked to the benzene ring through $R^3$, the electron withdrawing inductive effect and resonance effect by the benzene ring are reduced, such that the attack by $OH^-$ may be decreased. Accordingly, the decomposition of the ammonium functional group may be prevented.

In exemplary embodiments, the $R^3$ may have aromatic and aliphatic chains mixed together therein. Accordingly, the mechanical strength of the ion conductive polymer may be further improved.

In exemplary embodiments, the Ar may be a benzene ring.

In exemplary embodiments, the repeating unit represented by Formula 1 above may include at least one of repeating units represented by Formulas 1-1 to 1-5 below.

[Formula 1-1]

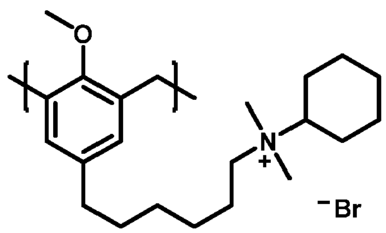

[Formula 1-2]

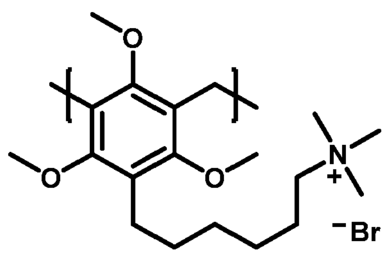

[Formula 1-3]

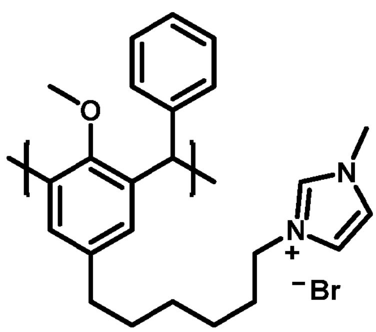

[Formula 1-4]

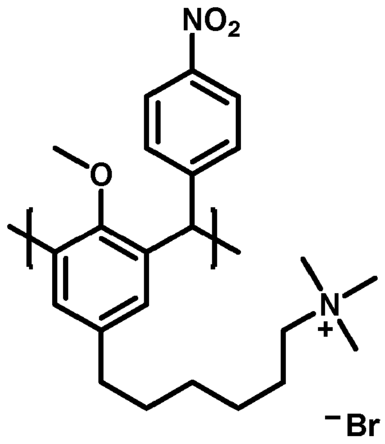

[Formula 1-5]

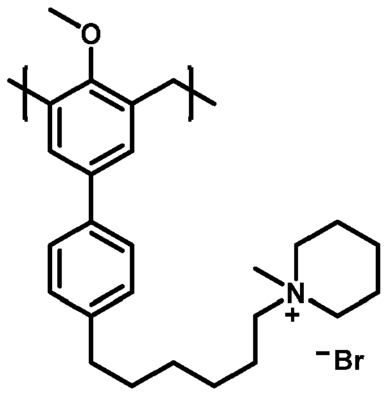

In exemplary embodiments, an $OH^-$ ionic conductivity of the ion conductive polymer may be 40 mS/cm to 80 mS/cm at 25 °C. For example, the $OH^-$ ionic conductivity of the ion conductive polymer may be 43 mS/cm to 70 mS/cm, 45 mS/cm to 65 mS/cm, 46 mS/cm to 63 mS/cm, or 47 mS/cm to 60 mS/cm at 25 °C.

In one embodiment according to the present disclosure, there is provided a method for preparing an ion conductive polymer.

First, a monomer having a benzene ring, which has at least one alkoxy group as substituent, is prepared.

The alkoxy group may be $-(OR^1)_a$ in Formula 1 above. Wherein, a may be an integer of 1 to 3. This means that the benzene ring is substituted by 1, 2 or 3 $-OR^1$ group(s). For example, a may be 1 or 3.

The benzene ring may be bonded with $R^3$ whose terminal is substituted with a halogen.

Next, the monomer reacts with an aldehyde under mild acidic conditions to obtain a precursor polymer.

When reacting the monomer with aldehyde under the mild acidic conditions (primary polymerization), a precursor polymer including the benzene ring in the main chain may be obtained.

The primary polymerization may be carried out in the presence of a mild acid. As the mild acid, the above-described mild acids may be used. For example, an acid having a pKa of -7 or more may be used.

As described above, when an ether bond (alkoxy group) is bonded at the benzene ring, the electrons of the benzene ring are placed in the electron-rich state. Accordingly, the synthesis of the ion conductive polymer may be performed under relatively mild acidic conditions rather than the super-strong acidic conditions such as triflic acid.

The aldehyde may have $R^2$-CHO, and after the primary polymerization, it will have a structure in which $R^2$ is linked to the main chain of the precursor polymer.

In some embodiments, $R^2$ may be further substituted with an electron withdrawing group, and in this case, the precursor polymer may be more easily produced by increasing the reactivity of the aldehyde.

Next, a quaternary ammonium group is introduced into the precursor polymer to synthesize the ion conductive polymer including the repeating unit represented by Formula 1 above.

The quaternary ammonium group may be introduced into a side chain of the benzene ring to exhibit ionic conductivity.

According to embodiments of the present disclosure, there is provided a separator including the ion conductive polymer.

In exemplary embodiments, the separator may be prepared by laminating ion conductive polymer films including the repeating unit represented by Formula 1 above.

According to embodiments of the present disclosure, there is provided a device including the separator. The device may include: a cathode; an anode to face the cathode; and the separator disposed between the cathode and the anode. The device according to exemplary embodiments may include a water electrolysis device, a $CO_2$ electrolysis device, a fuel cell, an electrolytic cell, or a vanadium flow battery and the other devices including separator.

The embodiments of the present disclosure described above include the following aspects, and can be implemented through at least one of the following aspects.

According to the first aspect of an ion conductive polymer includes a repeating unit represented by Formula 1 below.

[Formula 1]

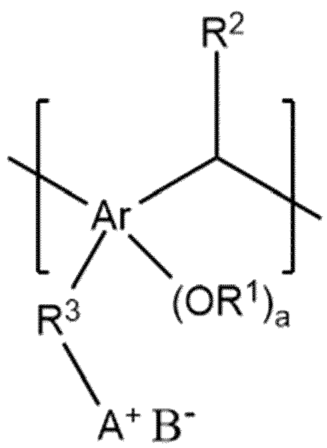

In Formula 1, $A^+$ is quaternary ammonium, $B^-$ is an anion, a is an integer of 1 to 3, $R^1$ is an organic group having 1 to 10 carbon atoms, $R^2$ is H or an organic group having 1 to 10 carbon atoms, $R^3$ is an organic group having 1 to 20 carbon atoms, which may include at least one of an alkylene group and/or an arylene group, and Ar is a benzene ring, wherein the alkylene group refers to bivalent saturated hydrocarbon group, such as including one or more methylene [$-CH_2-$] groups, and arylene group refers to bivalent aromatic hydrocarbon group, such as including one or more phenylene [$-C_6H_4-$] groups.

In the first aspect, according to the second aspect of the ion conductive polymer, the $B^-$may be a monovalent or divalent anion.

In the first or the second aspect, according to the third aspect of the ion conductive polymer, the $B^-$ may be a halogen anion.

In the third aspect, according to the fourth aspect of the ion conductive polymer, the $B^-$may be a bromine anion ($Br^-$).

In anyone of the first aspect to the fourth aspect, according to the fifth aspect of the ion conductive polymer, the $R^1$ may be a methyl group ($-CH_3$).

In anyone of the first aspect to the fifth aspect, according to the sixth aspect of the ion conductive polymer, the $R^2$ may be an organic group having 1 to 8 carbon atoms.

In anyone of the first aspect to the sixth aspect, according to the seventh aspect of the ion conductive polymer, the $R^3$ may be an organic group having 4 to 16 carbon atoms.

In the first aspect, according to the eighth aspect of the ion conductive polymer, the repeating unit represented by Formula 1 above may include at least one of repeating units represented by Formulas 1-1 to 1-5 below.

[Formula 1-1]

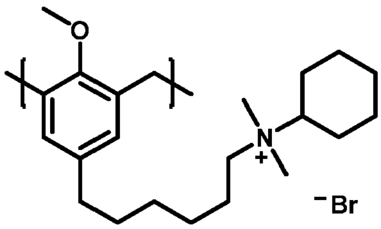

[Formula 1-2]

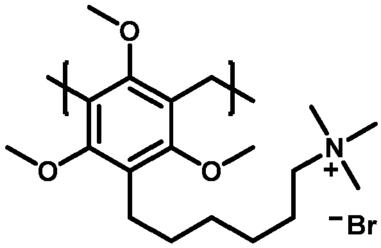

[Formula 1-3]

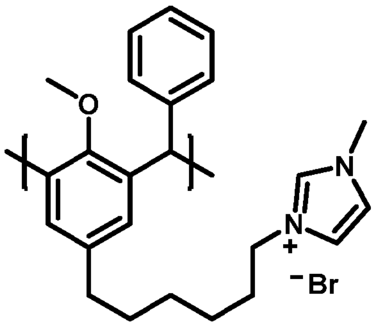

[Formula 1-4]

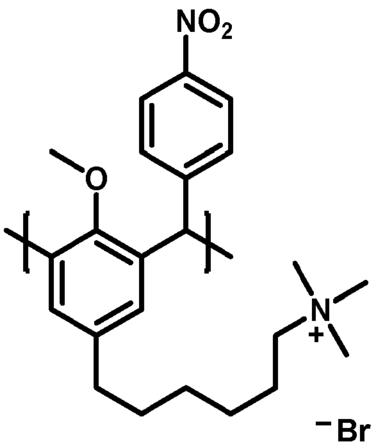

and

[Formula 1-5]

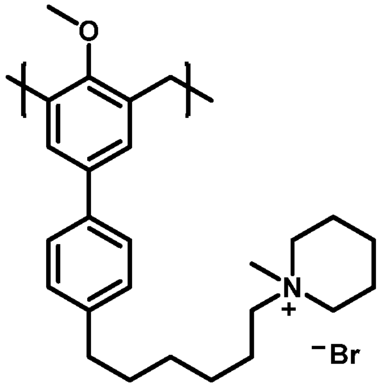

In anyone of the first aspect to the eighth aspect, according to the ninth aspect of the ion conductive polymer, an $OH^-$ ionic conductivity of the ion conductive polymer may be 40 mS/cm to 80 mS/cm at 25 °C.

According to tenth aspect of a method for preparing an ion conductive polymer, a monomer having a benzene ring in which at least one alkoxy group is substituted is prepared. The monomer reacts with an aldehyde under mild acidic conditions to obtain a precursor polymer. A quaternary ammonium group is introduced into the precursor polymer to synthesize an ion conductive polymer including a repeating unit represented by Formula 1 below.

[Formula 1]

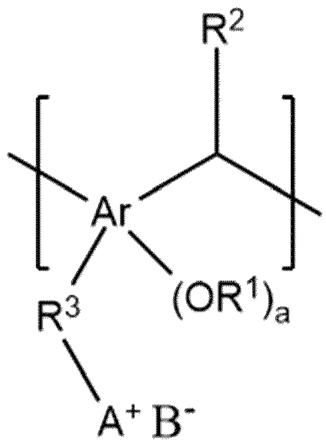

In Formula 1, $A^+$ is quaternary ammonium, $B^-$ is an anion, a is an integer of 1 to 3, $R^1$ is an organic group having 1 to 10 carbon atoms, $R^2$ is H or an organic group having 1 to 10 carbon atoms, $R^3$ is an organic group having 1 to 20 carbon atoms, which may include at least one of an alkylene group and/or an arylene group, and Ar is a benzene ring, wherein the alkylene group refers to bivalent saturated hydrocarbon group, such as including one or more methylene [$-CH_2-$] groups, and arylene group refers to bivalent aromatic hydrocarbon group, such as including one or more phenylene [$-C_6H_4-$] groups.

According to the eleventh aspect, a separator includes the above-described ion conductive polymer.

According to the twelfth aspect, a device includes a cathode, an anode to face the cathode, and the above-described separator which is disposed between the cathode and the anode.

According to the thirteenth aspect, the above device may include a water electrolysis device, a $CO^2$ electrolysis device, a fuel cell, an electrolytic cell, or a vanadium flow battery.

Hereinafter, examples are proposed to facilitate understanding of the present disclosure.

**Preparative Example 1: Preparation of monomer**

(1) Preparation of Monomer 1 (A-1)

50 mL of dichloromethane, anisole (5 g, 46 mmol), and aluminum chloride (6.78 g, 51 mmol) were added to a 100 mL two-neck round bottom flask, and then the mixture was stirred in an ice bath to prepare a mixed solution.

6-bromohexanoyl chloride (10.4 g, 49 mmol) was input into the prepared mixed solution through a syringe pump for 2 hours, and then 85 mL of 1 M aqueous hydrochloric acid solution was added thereto. After completion of the reaction, the aqueous solution layer was removed through a separatory funnel and washed with 1 M aqueous sodium hydroxide solution. After washing, the aqueous solution layer was removed, and the organic solvent layer was dried over magnesium sulfate anhydrous, then the organic solvent was removed through a reduced pressure concentrator to obtain a solid.

Triethylsilane (16.1 g, 139 mmol), trifluoroacetic acid (5.3 g, 46 mmol), and the obtained solid were input into a 100 mL round bottom flask. A reflux condenser was installed in the round bottom flask, and then the mixture was stirred at 85 °C for 24 hours. After stirring, the mixture was cooled in an ice bath, and then 53 mL of 1 M aqueous sodium hydroxide solution was added thereto. After completion of the reaction, the aqueous solution layer was removed through a separatory funnel, then the organic solvent layer was dried over magnesium sulfate anhydrous and purified by column chromatography to prepare 11.1 g of a Monomer 1 (A-1) represented by Formula 2-1 below.

[Formula 2-1]

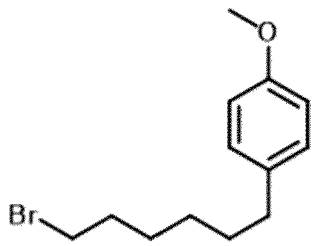

(2) Preparation of Monomer 2 (A-2)

30 mL of dichloromethane, 1,3,5-trimethoxybenzene (3 g, 18 mmol), and aluminum chloride (2.85 g, 21 mmol) were added to a 100 mL two-neck round bottom flask, and then the mixture was stirred in an ice bath to prepare a mixed solution.

6-bromohexanoyl chloride (4.57 g, 21 mmol) was input into the prepared mixed solution through a syringe pump for 2 hours, and then 45 mL of 1 M aqueous hydrochloric acid solution was added thereto. After completion of the reaction, the aqueous solution layer was removed through a separatory funnel and washed with a 1 M aqueous sodium hydroxide solution. After washing, the aqueous solution layer was removed, and the organic solvent layer was dried over magnesium sulfate anhydrous, then the organic solvent was removed through a reduced pressure concentrator to obtain a solid.

Triethylsilane (6.1 g, 52 mmol), trifluoroacetic acid (1.98 g, 17 mmol), and the obtained solid were input into a 100 mL round bottom flask. A reflux condenser was installed in the round bottom flask, and then the mixture was stirred at 85 °C for 24 hours. After stirring, the mixture was cooled in an ice bath, and then 53 mL of 1 M aqueous sodium hydroxide solution was added thereto. After completion of the reaction, the aqueous solution layer was removed through a separatory funnel, then the organic solvent layer was dried over magnesium sulfate anhydrous and purified by column chromatography to prepare 3.65 g of Monomer 2 (A-2) represented by Formula 2-2 below.

[Formula 2-2]

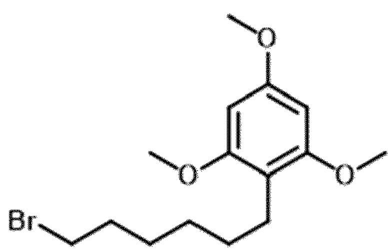

(3) Preparation of Monomer 3 (A-3)

75 mL of dichloromethane, 4-methoxybiphenyl (5 g, 27 mmol), and aluminum chloride (3.98 g, 30 mmol) were added to a 100 mL two-neck round bottom flask, and then the mixture was stirred in an ice bath to prepare a mixed solution.

6-bromohexanoyl chloride (6.08 g, 28 mmol) was input into the prepared mixed solution through a syringe pump for 2 hours, and then 50 mL of 1 M hydrochloric acid solution was added thereto. After completion of the reaction, the aqueous solution layer was removed through a separatory funnel and washed with a 1 M aqueous sodium hydroxide solution. After washing, the aqueous solution layer was removed, and the organic solvent layer was dried over magnesium sulfate anhydrous, then the organic solvent was removed through a reduced pressure concentrator to obtain a solid.

Triethylsilane (12.6 g, 109 mmol), trifluoroacetic acid (6.2 g, 54 mmol), and the obtained solid were input into a 100 mL round bottom flask. A reflux condenser was installed in the round bottom flask, and then the mixture was stirred at 85 °C for 24 hours. After stirring, the mixture was cooled in an ice bath, and then 60 mL of 1 M aqueous sodium hydroxide solution was added thereto. After completion of the reaction, the aqueous solution layer was removed through a separatory funnel, then the organic solvent layer was dried over magnesium sulfate anhydrous and purified by column chromatography to prepare 6.20 g of Monomer 3 (A-3) represented by Formula 2-3 below.

[Formula 2-3]

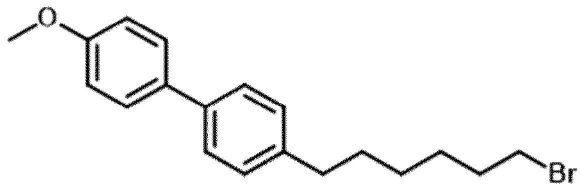

**Preparative** Example 2: Preparation of polymer

(1) Preparation of Polymer 1 (B-1)

14.8 mL of chloroform, 1.8 mL of methanesulfonic acid, paraformaldehyde (0.24 g, corresponding to 8 mmol of formaldehyde), and the prepared A-1 (2 g, 7 mmol) were input into a 25 mL round bottom flask. A reflux condenser was installed in the round bottom flask, and then the mixture was refluxed at 85 °C for 2 hours. After refluxing, the mixture was cooled to room temperature (25 °C) and 200 mL of methanol was added to precipitate a solid. The precipitated solid was filtered and washed twice with 50 mL of methanol, then dried in an oven to prepare 1.9 g of Polymer 1 (B-1) represented by Formula 3-1 below.

[Formula 3-1]

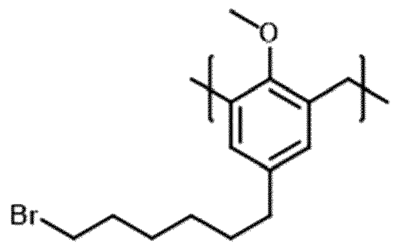

(2) Preparation of Polymer 2 (B-2)

12.0 mL of chloroform, 1.5 mL of methanesulfonic acid, paraformaldehyde (0.20 g, corresponding to 7 mmol of formaldehyde), and the prepared A-2 (2 g, 6 mmol) were input into a 25 mL round bottom flask. A reflux condenser was installed in the round bottom flask, and then the mixture was refluxed at 85 °C for 2 hours. After refluxing, the mixture was cooled to room temperature (25 °C) and input into 200 mL of methanol to precipitate a solid. The precipitated solid was filtered and washed twice with 50 mL of methanol, then dried in an oven to prepare 1.6 g of Polymer 2 (B-2) represented by Formula 3-2 below.

[Formula 3-2]

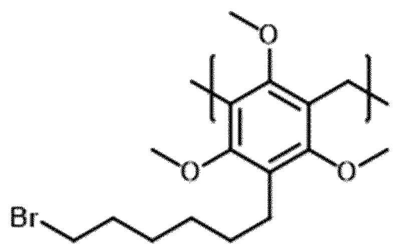

(3) Preparation of Polymer 3 (B-3)

14.8 mL of chloroform, 1.8 mL of methanesulfonic acid, benzaldehyde (0.77 g, 7 mmol), and the prepared A-1 (2 g, 7 mmol) were input into a 25 mL round bottom flask. A reflux condenser was installed in the round bottom flask, and then the mixture was refluxed at 85 °C for 2 hours. After refluxing, the mixture was cooled to room temperature (25 °C) and input into 200 mL of methanol to precipitate a solid. The precipitated solid was filtered and washed twice with 50 mL of methanol, then dried in an oven to prepare 2.3 g of Polymer 3 (B-3) represented by Formula 3-3 below.

[Formula 3-3]

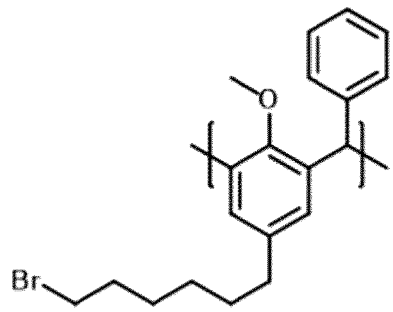

(4) Preparation of Polymer 4 (B-4)

14.8 mL of chloroform, 1.8 mL of methanesulfonic acid, 4-nitrobenzaldehyde (1.09 g, 7 mmol), and the prepared A-1 (2 g, 7 mmol) were input into a 25 mL round bottom flask. A reflux condenser was installed in the round bottom flask, and then the mixture was refluxed at 85 °C for 2 hours. After refluxing, the mixture was cooled to room temperature (25 °C) and input into 200 mL of methanol to precipitate a solid. The precipitated solid was filtered and washed twice with 50 mL of methanol, then dried in an oven to prepare 3.0 g of Polymer 4 (B-4) represented by Formula 3-4 below.

[Formula 3-4]

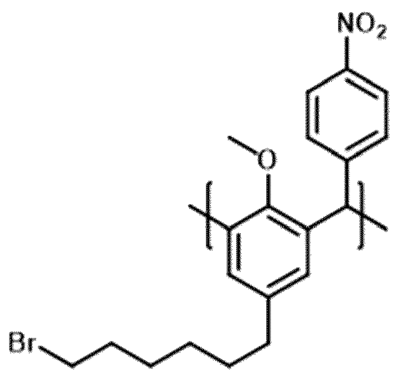

(5) Preparation of Polymer 5 (B-5)

11.5 mL of chloroform, 1.44 mL of methanesulfonic acid, paraformaldehyde (0.61 g, corresponding to 20 mmol of formaldehyde), and the prepared A-3 (2 g, 6 mmol) were input into a 25 mL round bottom flask. A reflux condenser was installed in the round bottom flask, and then the mixture was refluxed at 85 °C for 2 hours. After refluxing, the mixture was cooled to room temperature (25 °C) and input into 200 mL of methanol to precipitate a solid. The precipitated solid was filtered and washed twice with 50 mL of methanol, then dried in an oven to prepare 1.7 g of Polymer 5 (B-5) represented by Formula 3-5 below.

[Formula 3-5]

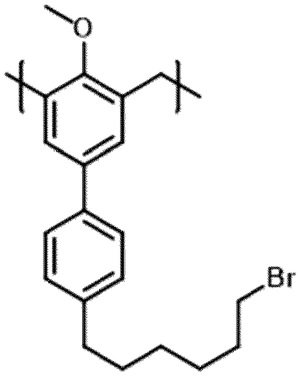

**Preparative Example 3: Preparation of separator**

**Example 1**

1.45 mL of N-methyl pyrrolidone and 0.25 g of B-1 were input into a 20 mL glass vial, and the mixture was stirred at room temperature (25 °C). After B-1 was completely dissolved, 0.17 g of N,N-dimethylcyclohexylamine was input therein, and the mixture was stirred at 80 °C for 24 hours. After stirring, the mixture was cooled to room temperature (25 °C), and the cooled solution was poured into a petri dish then dried in an oven at 80 °C for 24 hours to prepare a separator (C-1) formed of the polymer including the repeating unit represented by Formula 1-1.

Results of $^1$H-nuclear magnetic resonance ($^1$H-NMR) analysis performed on the prepared C-1 are as follows.

$^1$H-NMR(DMSO-$d_6$, ppm): 7.3(br, 2H), 4.0(br, 2H) 3.8(br, 3H), 3.6-3.2(br, 9H), 2.6-2.5(br, 2H), 2.0-1.0(br, 18H)

**Example 2**

2.12 mL of N-methyl pyrrolidone and 0.25 g of B-2 were input into a 20 mL glass vial, and the mixture was stirred at room temperature (25 °C). After B-2 was completely dissolved, 0.28 g of trimethylamine solution (28 %) was input therein, and the mixture was stirred at 80 °C for 24 hours. After stirring, the mixture was cooled to room temperature (25 °C), and the cooled solution was poured into a petri dish then dried in an oven at 80 °C for 24 hours to prepare a separator (C-2) formed of the polymer including the repeating unit represented by Formula 1-2.

Results of $^1$H-nuclear magnetic resonance spectroscopy analysis performed on the prepared C-2 are as follows.

$^1$H-NMR(DMSO-$d_6$, ppm): 3.9 (br, 2H) 3.8(br, 9H), 3.3-3.2(br, 11H), 2.7-2.6(br, 2H), 2.0-1.0(br, 8H)

**Example 3**

1.38 mL of N-methyl pyrrolidone and 0.25 g of B-3 were input into a 20 mL glass vial, and the mixture was stirred at room temperature (25 °C). After B-3 was completely dissolved, 0.10 g of 1-methylimidazole was input therein, and the mixture was stirred at 80 °C for 24 hours. After stirring, the mixture was cooled to room temperature (25 °C), and the cooled solution was poured into a petri dish then dried in an oven at 80 °C for 24 hours to prepare a separator (C-3) formed of the polymer including the repeating unit represented by Formula 1-3.

Results of $^1$H-nuclear magnetic resonance spectroscopy analysis performed on the prepared C-3 are as follows.

$^1$H-NMR(DMSO-$d_6$, ppm): 8.92(br, 1H), 7.9-7.0(br, 9H), 5.48(br, 1H) 5.01(br, 2H), 3.9-3.7(br, 6H), 2.64(br, 2H), 2.1-1.2(br, 8H)

## Example 4

1.83 mL of N-methyl pyrrolidone and 0.25 g of B-4 were input into a 20 mL glass vial, and the mixture was stirred at room temperature (25 °C). After B-4 was completely dissolved, 0.21 g of trimethylamine solution (28 %) was input therein, and the mixture was stirred at 80 °C for 24 hours. After stirring, the mixture was cooled to room temperature (25 °C), and the cooled solution was poured into a petri dish, and then dried in an oven at 80 °C for 24 hours to prepare a separator (C-4) formed of the polymer including the repeating unit represented by Formula 1-4.

Results of $^1$H-nuclear magnetic resonance spectroscopy analysis performed on the prepared C-4 are as follows.

$^1$H-NMR(DMSO-$d_6$, ppm): 8.16(br, 2H), 7.5-7.0(br, 4H), 5.50(br, 1H), 3.78(br, 3H), 3.5-3.0(br, 11H), 2.66(br, 2H), 1.8-1.2(br, 8H)

## Example 5

1.44 mL of N-methyl pyrrolidone, 1.44 g of dimethyl sulfoxide, and 0.25 g of B-5 were input into a 20 mL glass vial, and the mixture was stirred at room temperature (25 °C). After B-5 was completely dissolved, 0.1 g of N-methylpiperidine was input therein, and the mixture was stirred at 80 °C for 24 hours. After stirring, the mixture was cooled to room temperature (25 °C), and the cooled solution was poured into a petri dish then dried in an oven at 80 °C for 24 hours to prepare a separator (C-5) formed of the polymer including the repeating unit represented by Formula 1-5.

Results of $^1$H-nuclear magnetic resonance spectroscopy analysis performed on the prepared C-5 are as follows.

$^1$H-NMR(DMSO-$d_6$, ppm): 7.8-7.0(br, 6H), 4.0-3.8(br, 5H), 3.4-3.0(br, 9H), 2.63(br, 2H), 2.0-1.0(br, 14H)

## Comparative Example 1

Sustainion® X37-50 Grade RT product produced by Dioxide Materials was used.

## Comparative Example 2

Sustainion® X37-50 Grade T product produced by Dioxide Materials was used.

## Experimental Example: Evaluation of ionic conductivity of separator

The membrane samples of the separators prepared in Examples 1 to 5 and Comparative Examples 1 to 2 were cut into 1 cm × 3 cm and fixed between Pt electrodes of a Conductivity Clamp (BT-110, Scribner).

An ionic conductivity ($\sigma$) of an anion exchange membrane was evaluated in the form of $OH^-$ under conditions of room temperature (25 °C) and tertiary distilled water. A membrane resistance (R) was measured by means of a 4-point probe method using an impedance analyzer (VSP-3e, Biologics) in a frequency range of 0.1 kHz to 1 MHz. A thickness (T) of the membrane sample was measured using a micrometer.

The ionic conductivity ($\sigma$) was calculated using Equation 1 below, and results thereof are shown in Table 1 below.

[Equation 1]

$$\sigma = \frac{L}{R \times A} = \frac{L}{R \times W \times T}$$

In Equation 1, R is a membrane resistance ($\Omega$), A is a cross-sectional area ($cm^2$) of the membrane sample, L is a distance (cm) between electrodes, W is a width (cm) of the membrane sample, and T is a thickness (cm) of the membrane sample.

[TABLE 1]

| | $OH^-$ ionic conductivity (mS/cm) |
|---|---|
| Example 1 | 50.6 |
| Example 2 | 47.1 |
| Example 3 | 43.3 |
| Example 4 | 46.7 |

(continued)

| | $OH^-$ ionic conductivity (mS/cm) |
|---|---|
| Example 5 | 45.5 |
| Comparative Example 1 | 38.0 |
| Comparative Example 2 | 32.7 |

Referring to Table 1, it can be confirmed that the $OH^-$ ionic conductivities of Examples 1 to 5 are superior to the $OH^-$ ionic conductivities of Comparative Examples 1 to 2. Since a quaternary ammonium is bonded to a benzene ring via an organic group, $R^3$, in Examples 1 to 5, the ionic conductivity is superior to those in Comparative Example 1.

## Claims

1. An ion conductive polymer comprising a repeating unit represented by Formula 1 below:

[Formula 1]

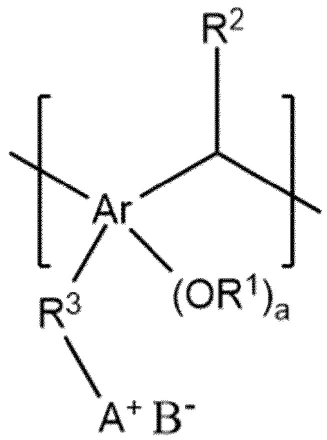

(in Formula 1, $A^+$ is quaternary ammonium, $B^-$ is an anion, a is an integer of 1 to 3, $R^1$ is an organic group having 1 to 10 carbon atoms, $R^2$ is H or an organic group having 1 to 10 carbon atoms, $R^3$ is an organic group having 1 to 20 carbon atoms, and Ar is a benzene ring; optionally wherein $R^3$ includes at least one of an alkylene group and/or an arylene group,
wherein the alkylene group refers to bivalent saturated hydrocarbon group, and the arylene group refers to bivalent aromatic hydrocarbon group).

2. The ion conductive polymer according to claim 1, wherein the $B^-$ is a monovalent or divalent anion.

3. The ion conductive polymer according to claim 1 or 2, wherein the $B^-$ is a halogen anion.

4. The ion conductive polymer according to any one of claims 1 to 3, wherein the $B^-$ is a bromine anion ($Br^-$).

5. The ion conductive polymer according to any one of claims 1 to 4, wherein the $R^1$ is a methyl group ($-CH_3$).

6. The ion conductive polymer according to any one of claims 1 to 5, wherein the $R^2$ is an organic group having 1 to 8 carbon atoms.

7. The ion conductive polymer according to claim 6, wherein the $R^2$ is substituted with at least one substituent in an electron withdrawing group (EWG), which is selected from the group consisting of a nitro group, a trifluoromethyl group, a cyano group, a fluoro group, and an acyl group.

8. The ion conductive polymer according to any one of claims 1 to 7, wherein the $R^3$ is an organic group having 4 to 16

carbon atoms.

9. The ion conductive polymer according to any one of claims 1 to 8, wherein the repeating unit represented by Formula 1 above comprises at least one of repeating units represented by Formulas 1-1 to 1-5 below:

[Formula 1-1]

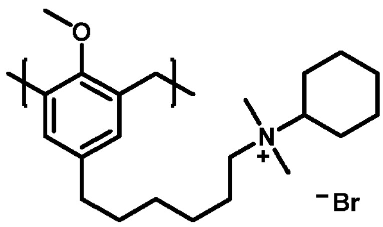

[Formula 1-2]

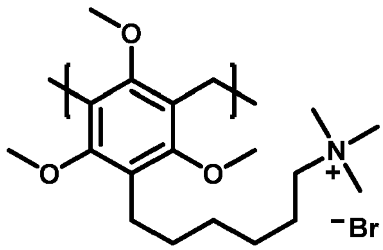

[Formula 1-3]

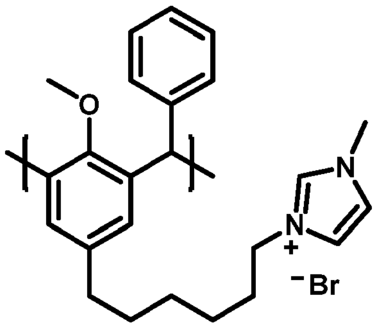

[Formula 1-4]

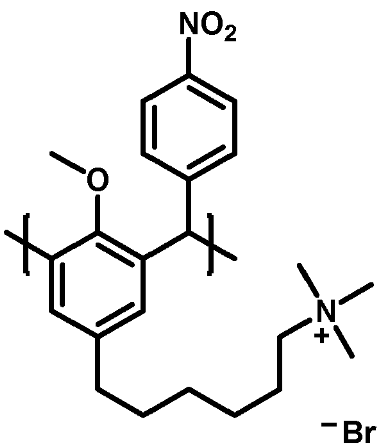

and

[Formula 1-5]

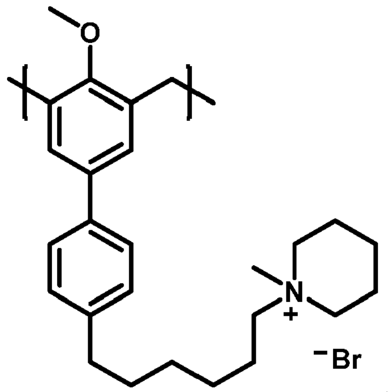

**10.** The ion conductive polymer according to any one claims 1 to 9, wherein an $OH^-$ ionic conductivity at 25°C of the ion conductive polymer is 40 mS/cm to 80 mS/cm.

**11.** A method for preparing an ion conductive polymer, comprising:

preparing a monomer having a benzene ring bearing at least one alkoxy group substituent;
reacting the monomer with an aldehyde under mild acidic conditions having a pKa of -7 to obtain a precursor polymer; and
introducing a quaternary ammonium group into the precursor polymer to synthesize an ion conductive polymer including a repeating unit represented by Formula 1 below:

[Formula 1]

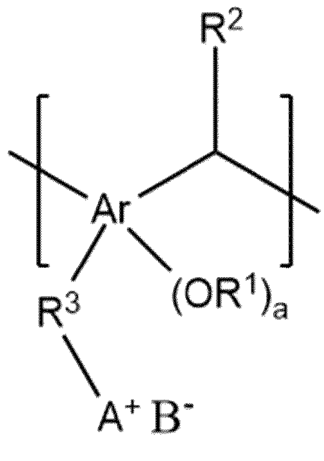

(in Formula 1, $A^+$ is quaternary ammonium, $B^-$ is an anion, a is an integer of 1 to 3, $R^1$ is an organic group having 1 to 10 carbon atoms, $R^2$ is H or an organic group having 1 to 10 carbon atoms, $R^3$ is an organic group having 1 to 20 carbon atoms, and Ar is a benzene ring; optionally wherein $R^3$ includes at least one of an alkylene group and/or an arylene group,
wherein the alkylene group refers to bivalent saturated hydrocarbon group, and the arylene group refers to bivalent aromatic hydrocarbon group).

**12.** A separator comprising the ion conductive polymer according to any one of claims 1 to 10.

**13.** The separator according to claim 12, wherein the separator is an ion exchange membrane.

**14.** A device comprising:

a cathode;
an anode to face the cathode; and
the separator according to claim 12 or 13, which is disposed between the cathode and the anode.

**15.** The device according to claim 14, wherein the device comprises a water electrolysis device, a $CO^2$ electrolysis device, a fuel cell, an electrolytic cell, or a vanadium flow battery.

**Amended claims in accordance with Rule 137(2) EPC.**

**1.** An ion conductive polymer comprising a repeating unit represented by Formula 1 below:

[Formula 1]

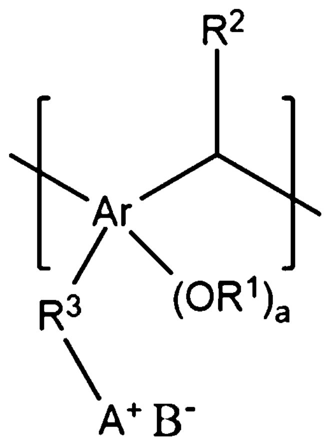

wherein, in Formula 1, $A^+$ is quaternary ammonium, $B^-$ is an anion, a is an integer of 1 to 3, $R^1$ is an organic group having 1 to 10 carbon atoms, $R^2$ is H or an organic group having 1 to 10 carbon atoms, $R^3$ is an organic group having 1 to 20 carbon atoms, and Ar is a benzene ring; optionally wherein $R^3$ includes at least one of an alkylene group and/or an arylene group,
wherein the alkylene group refers to bivalent saturated hydrocarbon group, and the arylene group refers to bivalent aromatic hydrocarbon group.

**2.** The ion conductive polymer according to claim 1, wherein the $B^-$ is a monovalent or divalent anion.

**3.** The ion conductive polymer according to claim 1 or 2, wherein the $B^-$ is a halogen anion.

**4.** The ion conductive polymer according to any one of claims 1 to 3, wherein the $B^-$ is a bromine anion ($Br^-$).

**5.** The ion conductive polymer according to any one of claims 1 to 4, wherein the $R^1$ is a methyl group ($-CH_3$).

**6.** The ion conductive polymer according to any one of claims 1 to 5, wherein the $R^2$ is an organic group having 1 to 8 carbon atoms.

**7.** The ion conductive polymer according to claim 6, wherein the $R^2$ is substituted with at least one substituent in an electron withdrawing group (EWG), which is selected from the group consisting of a nitro group, a trifluoromethyl group, a cyano group, a fluoro group, and an acyl group.

**8.** The ion conductive polymer according to any one of claims 1 to 7, wherein the $R^3$ is an organic group having 4 to 16 carbon atoms.

**9.** The ion conductive polymer according to any one of claims 1 to 8, wherein the repeating unit represented by Formula 1 above comprises at least one of repeating units represented by Formulas 1-1 to 1-5 below:

[Formula 1-1]

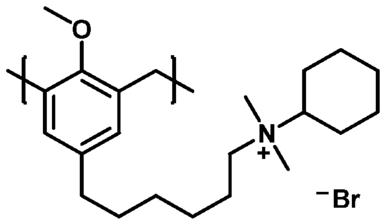

[Formula 1-2]

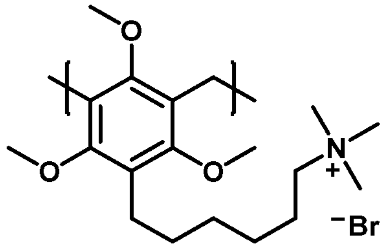

[Formula 1-3]

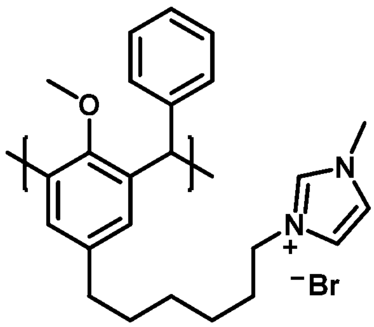

[Formula 1-4]

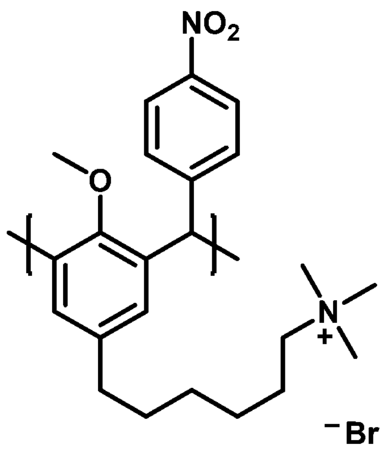

and

[Formula 1-5]

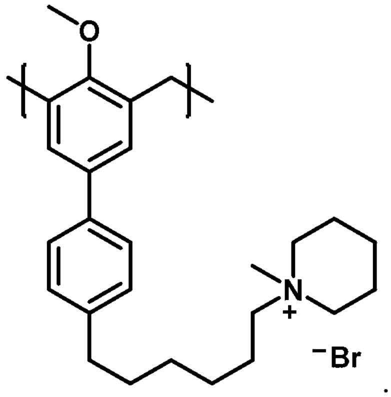

**10.** The ion conductive polymer according to any one of claims 1 to 9, wherein an $OH^-$ ionic conductivity at 25°C of the ion conductive polymer is 40 mS/cm to 80 mS/cm.

**11.** A method for preparing an ion conductive polymer, comprising:

preparing a monomer having a benzene ring bearing at least one alkoxy group substituent;
reacting the monomer with an aldehyde in the presence of an acid having a pKa of -7 or more to obtain a precursor polymer; and
introducing a quaternary ammonium group into the precursor polymer to synthesize an ion conductive polymer including a repeating unit represented by Formula 1 below:

[Formula 1]

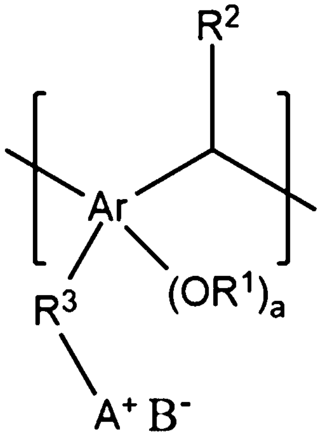

wherein, in Formula 1, $A^+$ is quaternary ammonium, $B^-$ is an anion, a is an integer of 1 to 3, $R^1$ is an organic group having 1 to 10 carbon atoms, $R^2$ is H or an organic group having 1 to 10 carbon atoms, $R^3$ is an organic group having 1 to 20 carbon atoms, and Ar is a benzene ring; optionally wherein $R^3$ includes at least one of an alkylene group and/or an arylene group,
wherein the alkylene group refers to bivalent saturated hydrocarbon group, and the arylene group refers to bivalent aromatic hydrocarbon group.

**12.** A separator comprising the ion conductive polymer according to any one of claims 1 to 10.

**13.** The separator according to claim 12, wherein the separator is an ion exchange membrane.

**14.** A device comprising:

a cathode;
an anode to face the cathode; and
the separator according to claim 12 or 13, which is disposed between the cathode and the anode.

**15.** The device according to claim 14, wherein the device comprises a water electrolysis device, a $CO_2$ electrolysis device, a fuel cell, an electrolytic cell, or a vanadium flow battery.

Europäisches Patentamt
European Patent Office
Office européen des brevets

# EUROPEAN SEARCH REPORT

Application Number
EP 24 22 2711

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 117 700 657 A (UNIV WESTLAKE) 15 March 2024 (2024-03-15) * claims 1-10 * * figure 1 * * examples 1-3 * ----- | 1-15 | INV. C08G16/02 C08G16/04 H01M50/414 H01M50/497 |
| A | CN 118 240 159 A (UNIV SOOCHOW) 25 June 2024 (2024-06-25) * claims 1-19 * ----- | 1-15 | |

| TECHNICAL FIELDS SEARCHED (IPC) |
|---|
| C08G |
| H01M |

The present search report has been drawn up for all claims

1

| Place of search | Date of completion of the search | Examiner |
|---|---|---|
| Munich | 3 June 2025 | Laudi, Ines |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.....................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 22 2711

This annex lists the patent family members relating to the patent documents cited in the above-mentioned European search report. The members are as contained in the European Patent Office EDP file on
The European Patent Office is in no way liable for these particulars which are merely given for the purpose of information.

03-06-2025

| Patent document cited in search report | Publication date | Patent family member(s) | Publication date |
|---|---|---|---|
| CN 117700657 A | 15-03-2024 | NONE | |
| CN 118240159 A | 25-06-2024 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 20180100079